# EUROPÄISCHE PATENTANMELDUNG

(11) **EP 3 470 581 A1**
(43) Veröffentlichungstag der Anmeldung: **17.04.2019**
(21) Anmeldenummer: 18200146.1
(22) Anmeldetag: 12.10.2018
(51) Int. Cl.: E02F 3/413, A01G 23/00, B66C 3/16, B66C 3/20

(54) **SCHWERLASTHEBEEINHEIT MIT EINEM EINEN HUB DURCHFÜHRENDEN SCHWERLASTGREIFER SOWIE EIN VERFAHREN ZUR DURCHFÜHRUNG EINER GREIFBEWEGUNG**

(30) Priorität: 13.10.2017 DE 102017123895
(71) Anmelder: Albach Maschinenbau GmbH, 85088 Menning (DE)
(72) Erfinder: BACHMAIER, Franz, 85088 Menning (DE)
(74) Vertreter: Winter, Brandl, Fürniss, Hübner, Röss, Kaiser, Polte - Partnerschaft mbB

(57) **Zusammenfassung**

Die Erfindung betrifft eine Schwerlasthebeeinheit (1) mit einem Ausleger (2), der zumindest einen mittels zumindest eines Aktuators (3) bewegbaren Auslegerarm (5) hat, an dessen Endabschnitt (8) ein Schwerlastgreifer (4) mit wenigstens zwei zangenartig relativ verschwenkbaren Greifbackenelementen (6, 6') gelagert ist, deren freie Enden (7, 7') sich bei einer Greifbewegung jeweils längs einer durch die Geometrie des Schwerlastgreifers (4) definierten Umlaufbahn (10) bewegen, und mit einer Steuer- und/oder Regeleinrichtung (11) zur Betätigung des zumindest einen Aktuators (3) und des Schwerlastgreifers (4), wobei die Steuer- und/oder Regeleinrichtung (11) dafür vorgesehen und ausgebildet ist, den zumindest einen Aktuator (3) in Abhängigkeit einer aktuellen Bewegungswinkelposition der Greifbackenelemente (6, 6') relativ zueinander derart zu betätigen, dass sich eine reale Bewegungsbahn der freien Enden (7, 7') der Greifbackenelemente (6, 6') gegenüber der durch die Geometrie des Schwerlastgreifers (4) definierten Umlaufbahn (10) abflacht. Weiterhin ist ein Verfahren zur Durchführung einer Greifbewegung der Schwerlasthebeeinheit (1) Gegenstand der Erfindung.

## Beschreibung

Die vorliegende Erfindung betrifft eine Schwerlasthebeeinheit, etwa einen Rundholzgreifer, der Teil einer Kraneinheit eines mobilen Holzhackers ist, gemäß dem Oberbegriff des Anspruchs 1. Des Weiteren ist die Erfindung auf ein Verfahren zur Durchführung einer Greifbewegung einer solchen Schwerlasthebeeinheit gerichtet.

### Hintergrund der Erfindung

Gattungsgemäße Schwerlasthebeeinheiten sind dazu vorbereitet ein Rohmaterial, vorzugsweise Holz, zu greifen und einer weiterverarbeitenden Einheit, vorzugsweise einem Hackaggregat, zuzuführen, sodass daraus etwa Holzschnitzel herstellbar sind.

Die Schwerlasthebeeinheit wird von einem Bediener / Fahrer gesteuert. Dieser gibt, abhängig von der Position des Auslegers und dem Schwerlastgreifer, bei Bedarf die Anweisung, eine Greifbewegung durchzuführen, um das Rohmaterial mit der Schwerlasthebeeinheit zu greifen.

### Stand der Technik

Beispielhaft aus der DE 10 2008 008 441 A1 ist eine gattungsgemäße Schwerlasthebeeinheit, die Teil eines mobilen Holzhackers ist, bekannt.

Nachteilig an dem Stand der Technik ist folgender Sachverhalt: der Schwerlastgreifer am Ende des Auslegers kommt vor der Greifbewegung nahe dem zu greifenden Rohmaterial und somit meist nahe dem Untergrund / Erdboden zum Stehen. Aufgrund der Nähe des Greifers zum Untergrund bewirkt die nun folgende Greifbewegung, dass die von dem Schwerlastgreifer ausgebildeten Greifbackenelemente zumindest teilweise in den Erdboden eingreifen und somit Schmutz in Form von Erde und besonders Steinen mitaufnehmen / einklemmen. Jener Schmutz wird bei der anschließenden Bewegung / Verschwenkung des Auslegers der weiterverarbeitenden Einheit, das heißt etwa dem Hackaggregat, zugeführt. Deren Wirkungsgrad sowie Lebensdauer werden durch den unerwünschten Schmutzeintrag gesenkt.

### Kurzbeschreibung der Erfindung

Der vorliegenden Erfindung liegt angesichts dieses Standes der Technik die Aufgabe zugrunde, die Nachteile aus dem Stand der Technik zu beheben oder zumindest zu mildern. Insbesondere zielt die Erfindung auf die Bereitstellung einer Schwerlasthebeeinheit ab, die keinen oder zumindest kaum Schmutz mitaufnimmt, wenn ihr Schwerlastgreifer Rohmaterial aufgenommen / gegriffen hat. Darüber hinaus wird erfindungsgemäß die Entwicklung eines Verfahrens angestrebt, das eine effiziente Greifbewegung ermöglicht. Anders ausgedrückt zielt die Erfindung darauf ab, dass einem von der Schwerlasthebeeinheit gespeisten Hackaggregat nahezu ausschließlich Holz zugeführt wird, sodass das Hackaggregat weder Wucht, noch Material auf nicht oder nur schwer zerhäckselbare Komponenten, wie Stein, überträgt und damit neben einer erhöhten Lebensdauer auch einen erhöhten thermischen Wirkungsgrad.

Dies wird erfindungsgemäß mittels einer Schwerlasthebeeinheit mit den Merkmalen des Anspruchs 1 und mittels eines Verfahrens gemäß den Merkmalen des Anspruchs 10 gelöst. Vorteilhafte Ausführungsformen sind Gegenstand der Unteransprüche.

Der Gegenstand der Erfindung ist demnach eine Schwerlasthebeeinheit, vorzugsweise zur Montage an einem Fahrzeug, insbesondere einem forstwirtschaftlichen Fahrzeug, beispielsweise einem mobilen Hacker. Die Schwerlasthebeeinheit weist einen Ausleger auf, der zumindest einen mittels zumindest eines Aktuators, wie einem Hydraulikzylinder, bewegbaren Auslegerarm hat, an dessen Endabschnitt ein Schwerlastgreifer mit wenigstens zwei zangenartig relativ verschwenkbaren Greifbackenelementen gelagert ist, deren freie Enden sich bei einer Greifbewegung jeweils längs / entlang einer durch die Geometrie des Schwerlastgreifers definierten Umlaufbahn, die vorzugsweise eine Ellipse darstellt, bewegen. Die Schwerlasthebeeinheit weist überdies eine Steuer- und/oder Regeleinrichtung zur Betätigung des zumindest einen Aktuators und des Schwerlastgreifers auf. Die Greifbewegung dient der Aufnahme von Rohmaterial, vorzugsweise von Holz.

Gemäß der Erfindung ist die Steuer- und/oder Regeleinrichtung dafür vorgesehen und ausgebildet ist, den zumindest einen Aktuator in Abhängigkeit einer aktuellen Bewegungswinkelposition der Greifbackenelemente relativ zueinander derart zu betätigen, dass sich eine reale Bewegungsbahn der freien Enden der Greifbackenelemente, das heißt einer Bewegungsbahn, auf der sich die Greifbackenelemente in einem absoluten / fahrzeugfesten Bezugssystem bewegen, gegenüber der durch die Geometrie des Schwerlastgreifers definierten Umlaufbahn abflacht.

Relativ zu dem Untergrund / Erdboden wird Schwerlastgreifer demnach mit einer dazu vertikalen Bewegung beaufschlagt, um, in Einklang mit der Position der Greifbackenelemente zueinander, einem schmutzpackenden Eingriff der Schwerlastgreifer in den Untergrund vorzubeugen.

Die Hubbewegung des Endabschnitts ist in Abhängigkeit der aktuellen Bewegungswinkelposition der Greifbackenelemente relativ zueinander mittels einer Feed-Forward-Steuerung / Vorsteuerung gesteuert. Gemäß einer Vorsteuerung wird eine Stellgröße, in diesem Fall die aus der Position der Greifbackenelemente resultierende Greifhubbewegung, mit einem Wert beaufschlagt, der unabhängig von den Zuständen der Regelstrecke, das heißt von den einzelnen Aktuatoren und deren Zwischenleitungen, ist. Demnach erfolgt die Ansteuerung des zumindest einen Aktuators lediglich in Abhängigkeit des einzustellenden Hubs, der von der Position der Greifbackenelemente zueinander festgelegt, vorzugsweise von einer Zuordnungstabelle vorbestimmt, ist. Die Vorsteuerung zeichnet sich durch ein hohes Maß an Robustheit aus.

In anderen Worten lässt sich die Erfindung strukturell derart beschreiben, dass in der Schwerlasthebeeinheit eine Steuer- und/oder Regeleinrichtung vorhanden ist, die zumindest einem Aktuator ein Signal sendet, das eine Änderung der Position des Endabschnitts des Auslegearms relativ zum Untergrund hervorruft. Jene Änderung ist hierbei abhängig von der Position, vorzugsweise der Winkelposition, der Greifbackenelemente zueinander. Zumindest in einer gewissen Winkelspanne der Greifbackenelemente zueinander gilt demnach: Je weiter die Greifbackenelemente aufeinander zu geschwenkt worden sind, desto höher ist die zumindest teilweise von dem Aktuator hervorgerufene Hubbewegung. So ist jene Hubbewegung etwa maximal, wenn die Greifbackenelemente vollständig aufeinander zu geschwenkt worden sind / verschlossen sind.

Jener von der Erdoberfläche abgewandte, die Distanz vergrößernde Greifhub bewirkt, dass die Greifbackenelemente bei der Greifbewegung deutlich weniger bzw. gar nicht mit dem Untergrund in Kontakt gelangen. Somit wird bei einer Greifbewegung weniger Schmutz mitgerissen, was wiederum in einer Abnahme des dem Hackaggregat zugeführten Schmutzes resultiert.

In einer bevorzugten Ausführungsform ergibt sich die reale Bewegungsbahn der freien Enden der Greifbackenelemente durch eine Überlagerung der Bewegung der Greifbackenelemente längs / entlang der durch die Geometrie des Schwerlastgreifers definierten Umlaufbahn und einer durch die Betätigung des zumindest einen Aktuators bewirkten Hubbewegung des Endabschnitts des zumindest einen Auslegerarms. Hierbei wird jene Überlagerung von der Steuer- und/oder Regeleinrichtung derart berechnet, dass der zumindest eine Aktuator eine möglichst minimale Bewegung hervorruft / Weg verfährt um die gewünschte Hubbewegung zu erreichen.

Die vorzugsweise aus der Überlagerung resultierende reale Bewegungsbahn der freien Enden nimmt weiter bevorzugt absolut betrachtet zumindest annähernd eine Geradenform an. So erreicht die Überlagerung von Verschwenkung (Greifbackenelemente) und Hub (Auslegerarm), dass aus der ursprünglich rein ellipsoiden Verschwenkbahn der Greifbackenelemente nun eine relativ zu einem absoluten Bezugssystem, wie dem mobilen Hacker oder auch dem Erdboden, zumindest annähernde Geradenform resultiert. Jene Geradenform ist wahlweise parallel oder auch geneigt zu einem Untergrund führbar. Mittels der Steuer- und/oder Regeleinrichtung ist die Form der geraden an die jeweiligen Umgebungsbedingungen anpassbar.

Vorteilhafterweise verläuft die jeweilige Geradenform quer, insbesondere senkrecht, zu der durch die Betätigung des zumindest einen Aktuators bewirkten Hubbewegung des Endabschnitts. Somit ist die Greifbewegung im Falle eines im Wesentlichen ebenen Untergrunds derart abgestimmt, dass ein dem Untergrund nächstliegender Punkt des Schwerlastgreifers über die Greifbewegung hinweg, das heißt zeitlich integral über die Greifbewegung gesehen, einen im Wesentlichen konstanten Abstand, der größer als null ist, zum Untergrund aufweist. Dies garantiert einen gänzlichen Wegfall des Schmutzeintrags, da der Schwerlastgreifers bzw. die Greifbackenelemente nur noch mit dem zu greifenden Objekt, jedoch nicht mehr mit dem schmutzeintragverursachenden Untergrund in Berührung kommt / kommen.

In einer bevorzugten Ausführungsform ist die Zuordnung zwischen der aktuellen Bewegungswinkelposition der Greifbackenelemente relativ zueinander und der dazu korrelierenden / korrespondierenden Hubbewegung in der Steuer- und/oder Regeleinrichtung vorbestimmt. Somit kann die von dem zumindest einen Aktuator hervorgerufene Hubbewegung im Vorhinein optimal auf die Umlaufbahn der Greifbackenelemente abgestimmt werden. Hierbei wird die, wie vorstehend erwähnt vorzugsweise ellipsoide, Umlaufbahn der Greifbackenelemente in eine Vielzahl, beispielsweise 600, diskreter Punkte unterteilt. Jedem jener diskreten Punkte auf der Umlaufbahn ist ein entsprechender Betrag der Hubbewegung des Schwerlastgreifers zugeordnet. Auf diese Weise wird dem erfindungsgemäßen Gedanken, die Hubbewegung in Abhängigkeit der Greifbackenelemente zueinander einzustellen, Rechnung getragen. Von einem Fachmann wird diese Ausführungsform derart interpretiert, dass der resultierende Greifhub möglicherweise wieder von einer Anzahl von Aktuatoren in Abstimmung zueinander herzustellen ist. Jene Abstimmung ist von der Zuordnung der Position der Greifbackenelemente zueinander und dem dazu korrespondierenden Greifhub unabhängig und ist in der Steuer- und/oder Regeleinrichtung demnach der Zuordnung nachgeschaltet.

In einer weiteren vorteilhaften Ausführungsform der Erfindung ist die Bewegungswinkelposition der Greifbackenelemente relativ zueinander über eine Greifmesseinrichtung erfassbar, die dazu vorbereitet ist, ein Signal über eine Kabelverbindung unter Zwischenschaltung der Steuer- und/oder Regeleinrichtung an den zumindest einen Aktuator zu senden. Die Ausgestaltung jener Kabelverbindung ist selbst dann möglich, wenn der Schwerlastgreifer unbegrenzt rotierbar zum Auslegearm angeordnet ist. Alternativ zur Kabelverbindung ist auch eine kabellose, wie eine Bluetooth- oder eine Funkverbindung, als Kommunikationsbrücke zwischen der Greifmesseinrichtung und der Steuer- und/oder Regeleinrichtung denkbar. Vorteilhafterweise handelt es sich bei dem die Greifbackenbecken verschwenkenden Mechanismus um einen hydraulischen Zylinder. In diesem Fall ist die Greifmesseinrichtung ein einfacher Lagesensor, der in jenen Zylinder integriert ist und die Position des Hydraulikkolbens detektiert und an die Steuer- und Regeleinrichtung weitergibt.

Besonders bevorzugt weist der Auslegerarm einen zweiten Aktuator und/oder einen dritten Aktuator auf, sodass der Auslegerarm zumindest zwei oder drei Verstell-Freiheitsgrade aufweist, um die Hubbewegung des Endabschnitts des zumindest einen Auslegerarms zu realisieren. Der zweite sowie der dritte Aktuator sind hierbei von derselben Steuer- und Regeleinrichtung angesteuert. Mittels jener zusätzlichen Aktuatoren ist die Flexibilität der Einstell-/Erreichmöglichkeiten der Schwerlasthebeeinheit erhöht. So ist auch in unübersichtlichen Umgebungen eine zuverlässige Reichweite des Auslegers garantiert. Vorteilhafterweise sind der erste, zweite und dritte Aktuator als gleichartige Hydraulikzylinder ausgeformt, wodurch Skaleneffekte in der Herstellung resultieren.

Alternativ zur Vorsteuerung ist es im Rahmen der Erfindung ebenfalls möglich, dass in der Steuer- und/oder Regeleinrichtung ein zusätzlicher Regler angeordnet ist, der dazu vorbereitet ist, die Hubbewegung des Endabschnitts des zumindest einen Auslegerarms nach einer zumindest teilweise durchgeführten Greifbewegung in Rückkopplung mit der aktuellen Bewegungswinkelposition der Greifbackenelemente relativ zueinander zu überprüfen und gegebenenfalls zu korrigieren. Somit ist die Sicherheit erhöht, dass der gewünschte Greifhub ungeachtet von äußeren Beeinträchtigungen auch tatsächlich durchgeführt ist. Hierfür wird vorzugsweise auf vorhandene Lagesensoren zurückgegriffen. Jene Regelung ist alternativ auch etwa derart umsetzbar, dass ein Sensor, wie eine Lichtschranke, die Position des Endabschnitts des Auslegerarms erfasst und in ein Signal umwandelt. Jenes Signal, die Ist-Größe, wird dann mit dem vorgegebenen Greifhub, der Soll-Größe, verglichen, sodass die Ist-Größe gegebenenfalls iterativ an die Soll-Größe angepasst werden kann.

In der Ausführungsform, in der mehr als nur ein Aktuator in der Schwerlasthebeeinheit angeordnet ist, ist es weiter vorteilhaft, wenn der Schwerlastgreifer die benötigte Hubbewegung mittels der Position der Greifbackenelemente zueinander vorgibt und der erste, zweite und/oder dritte Aktuator unter Zwischenschaltung einer weiteren Regelung derart aufeinander abgestimmt sind, dass sie im Zusammenspiel miteinander den von dem Schwerlastgreifer vorgegebenen Greifhub gewährleisten. So wird dem Umstand Folge geleistet, dass in Abhängigkeit des von dem Ausleger hergestellten Hebelarms ein gleicher Greifhub nicht in einer gleichen Ausleger-Bewegung resultiert.

Die vorzugsweise (teil-)ellipsoide Umlaufbahn der Greifbewegung bewirkt, dass die Greifbackenelemente relativ zum Boden zunächst einen hohen Gradienten in der Greifhubrichtung formen, bevor der Gradient in der Richtung quer zur Greifhubrichtung zunimmt. Dies hat für den Greifhub den Effekt, dass er bei konstanter Winkelgeschwindigkeit der Greifbackenelemente zunächst eine hohe Steigung besitzt, das heißt, viel zunimmt, bevor seine Steigung sinkt, das heißt er weniger zunimmt.

Die erfindungsgemäße Schwerlasthebeeinheit ist vorteilhafterweise dazu vorbereitet, in einen mobilen Holzhacker zur Herstellung von Hackschnitzeln integriert zu sein. Dieser weist einen fahrbaren Unterbau auf, auf dem die Schwerlasthebeeinheit, die dazu vorbereitet ist, einem Hackaggregat Holz zuzuführen, das von diesem zerhackt wird, angeordnet ist.

Weiterhin liegt der Erfindung ein Verfahren zum Durchführen einer Greifbewegung der Schwerlasthebeeinheit zugrunde. Dieses weist die folgenden Schritte auf:
- Befehl zum Durchführen einer Greifbewegung der Greifbackenelemente durch einen Bediener / Fahrer;
- Ermittlung der Position der Greifbackenelemente zueinander mittels der Greifarmmesseinrichtung;
- Senden der Position der Greifbackenelemente zueinander an ein zentrales Steuergerät / die Steuer- und/oder Regeleinrichtung, wobei jenes Senden vorzugsweise über eine Kabelverbindung geschieht;
- Zuordnung jener Position der Greifbackenelemente zueinander die Steuer- und/oder Regeleinrichtung zu einer korrespondierenden Greifhubbewegung;
- Senden des Greifhubs an den zumindest einen Aktuator;
- Durchführen des Greifhubs durch den zumindest einen Aktuator.

In den Ausführungsformen, in denen mehrere Aktuatoren für die Bewegung des Auslegerarms zuständig sind, berechnet vorzugsweise eine Untereinheit der Steuer- und Regeleinrichtung die jeweils von den einzelnen Aktuatoren durchzuführenden Bewegungen, um den gewünschten Greifhub der des Schwerlastgreifers zu erreichen.

Bevorzugt geschehen das Ermitteln der Position der Greifbackenelemente zueinander, das nachgeschaltete Senden jener Position, sowie die anschließende Zuordnung der Greifbackenposition zu dem Greifhub und deren Zurücksenden an den entsprechenden Aktuator kontinuierlich oder auch schrittweise/getaktet. Somit ist, wenn beispielsweise eine Greifbewegung zunächst gestartet, jedoch vor ihrem Abschluss abgebrochen wird, zunächst ein Greifhub und anschließend wieder ein dem Greifhub entgegengesetzter Hub durchgeführt.

Jeder angeordnete Aktuator ist mit einer Messvorrichtung gekoppelt, die dessen Position an die Steuer- und Regeleinrichtung weitergibt. Jene Messvorrichtung ist jeweils integral oder auch separat mit dem Aktuator auszugestalten. Der Aktuator selbst ist bevorzugt als Hydraulikzylinder ausgestaltet. Alternativ ist der zumindest eine Aktuator auch als Seilzug oder als mechanisches Getriebe realisierbar.

Die Erfindung wird nachstehend anhand bevorzugter Ausführungsbeispiele unter Bezugnahme auf die begleitenden Figuren näher erläutert. Die Figuren sind lediglich schematischer Natur und dienen ausschließlich dem Verständnis der Erfindung. Die gleichen Elemente sind mit denselben Bezugszeichen versehen. Die einzelnen Elemente sind untereinander austauschbar. Es zeigen:
- Fig. 1:: eine schematische Ansicht einer Schwerlasthebeeinheit auf einem mobilen Hacker;
- Fig. 2:: eine schematische Ansicht der Greifbewegung eines Schwerlastgreifers der Schwerlasthebeeinheit;
- Fig. 3:: die Schwerlasthebeeinheit in einer zweiten Ausführungsform; und
- Fig. 4:: die Schwerlasthebeeinheit in einer dritten Ausführungsform.

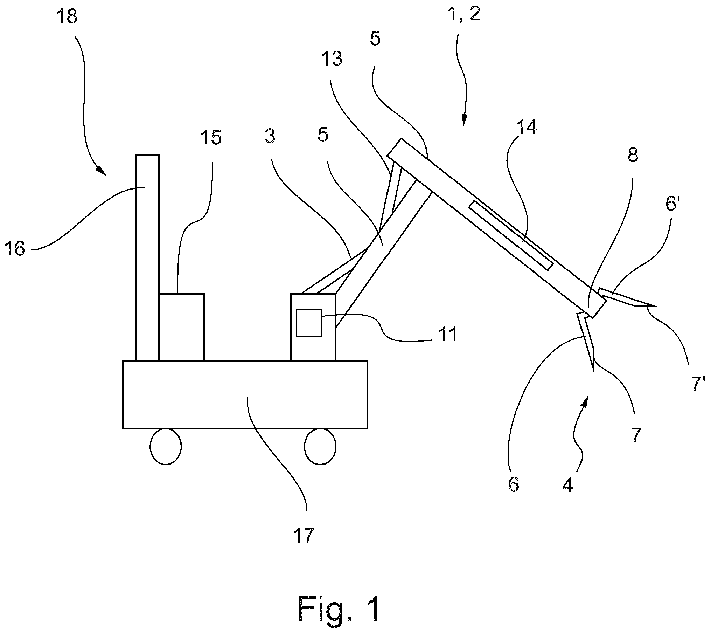

Fig. 1 zeigt einen mobilen Hacker 18, auf dem eine Schwerlasthebeeinheit 1 gemäß der Erfindung angeordnet ist. Die Schwerlasthebeeinheit 1 nimmt Rohmaterial / Holz auf und gibt dieses an ein Hackaggregat 15 weiter. Darin wird das Holz zu Hackschnitzeln verarbeitet und über einen Wurfturm 16 ausgegeben. Der mobile Hacker 18 weist überdies einen fahrbaren Untergrund 17 auf, um autark bewegbar zu sein.

Die Schwerlasthebeeinheit 1 weist einen Ausleger 2 auf. Dieser ist in einen Auslegearm 5 und einen Schwerlastgreifer 4 aufteilbar. Der zumindest eine Auslegearm 5 ist über zumindest einen Aktuator 3 bewegbar. Vorliegend ist der erste Aktuator 3 für eine Bewegung eines ersten Segments des Auslegearms 5 zuständig. Zusätzlich ist ein zweiter Aktuator 13 für eine Bewegung eines zweiten Segments des Auslegearms 5 zuständig. Ein dritter Aktuator 14 schließlich realisiert eine Teleskopfunktion des zweiten Segments des Auslegearms 5.

Der Schwerlastgreifer 4 weist zwei ist an einem Endabschnitt 8 des Auslegerarms 5 mit dem Auslegerarm 5 gekoppelt. Der Schwerlastgreifer 4 weist zwei Greifbackenelemente 6, 6' auf, mittels denen eine Greifbewegung durchführbar ist. Jene Greifbewegung ist von einer Steuer- und Regeleinrichtung 11 im Sinne der Erfindung gesteuert / geregelt. Die freien Enden der Greifbackenelemente 6, 6' sind mit den Bezugszeichen 7, 7' versehen.

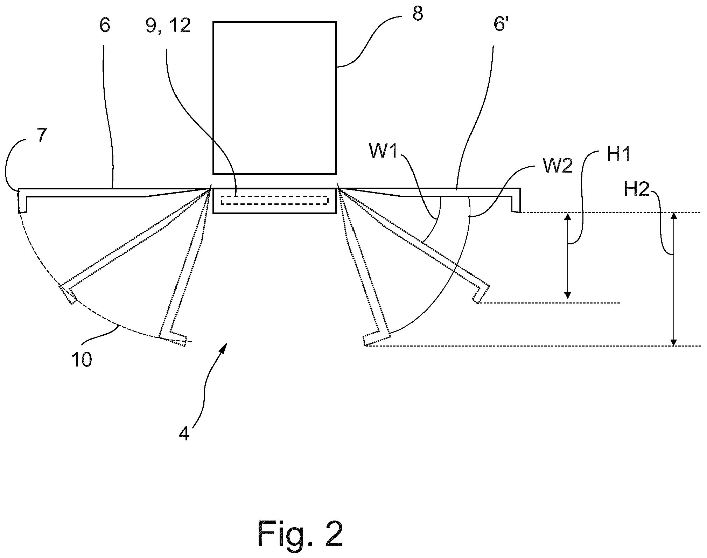

Unter Bezugnahme auf Fig. 2 sei die erfindungsgemäße Zusammenwirkung zwischen der Greifbewegung und einem Greifhub vorgestellt. Die Greifbackenelemente 6, 6' sind zueinander mittels eines schematisch angedeuteten Verschwenkmechanismus 9 zueinander verdrehbar, um somit die Greifbewegung durchzuführen. Bei dem Verschwenkmechanismus 9 handelt es sich etwa um einen quer zur Auslegerlängsrichtung angeordneten Hydraulikzylinder.

Ausgehend von einer Ausgangstellung, in der die Greifbacken 6, 6' voll aufgespreizt sind, wird der Verschwenkmechanismus 9 bei einer Greifbewegung derart betätigt, dass die Greifbacken 6, 6' jeweils um einen Winkel W1 aufeinander zu geschwenkt werden. Hierbei beweg sich freien Enden 7, 7'bei der Greifbewegung jeweils längs / entlang einer durch die Geometrie des Schwerlastgreifers 4 definierten Umlaufbahn 10. Die ellipsoide Umlaufbahn ist in eine Radial- und eine Axialkomponente aufteilbar. Die Radialkomponente verringert den Abstand der Greifarme 6, 6' relativ zueinander und ermöglicht somit ein (kraftschlüssiges) Einklemmen und/oder ein (formschlüssiges) Greifen von Rohmaterial / Holz. Die Axialkomponente der Greifbewegung stellt eine Vertikalbewegung dar, die in einem ersten Zustand mit H1 referenziert ist.

Damit der Schwerlastgreifer 4 eine untergrundberührungsfreie Greifbewegung durchführt, ist dem Winkel W1 in der Steuer- und Regeleinrichtung 11 der Greifhub H1 zugeordnet, der wiederum dem zumindest einen (in Fig. 2 nicht dargestellten) Aktuator 3 des Auslegers 2 übersandt wird. Wenigstens dieser führt den Greifhub H1 durch, sodass der Endabschnitt 8 in Abhängigkeit der Position der Greifbacken 6, 6' zueinander mit dem entsprechenden, etwa von einem Untergrund weggerichteten Hub beaufschlagt wird, sodass der Greifhub H1 des Schwerlastgreifers 4 resultiert. Analog hierzu erfährt der Schwerlastgreifer 4 bei dem Winkel W2 den Greifhub H2.

Um die Relativposition bzw. den Winkel der Greifarme 6, 6' zu detektieren, ist eine Greifmesseinrichtung 12 im Bereich des Verschwenkmechanismus 9 angeordnet ist. Diese ist integral mit oder auch separat zum Verschwenkmechanismus 9 ausgestaltet. Bei gattungsgemäßen Schwerlasthebeeinheiten ist eine unbegrenzte Relativrotation um die Längsachse zwischen dem Schwerlastgreifer 4 und dem Auslegerarm 5 möglich.

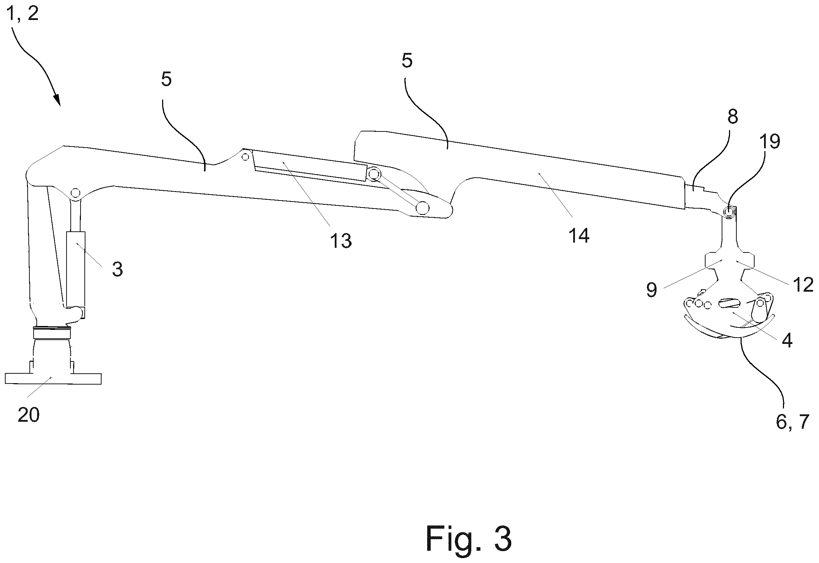

Unter Bezugnahme auf Fig. 3 sei eine weitere, detailliertere Ausführungsform des Auslegers 2 der Schwerlasthebeeinheit 1 beschrieben. In dem ersten Aktuator 3, dem zweiten Aktuator 13 sowie dem als Teleskopzylinder ausgeformten dritten Aktuator 14 sind hierbei Wegmesssysteme integriert. Diese senden Signale / Informationen hinsichtlich des von ihnen durchgeführten Weges kontinuierlich oder getaktet an die in Fig. 3 nicht dargestellte Steuer- und/oder Regeleinrichtung 11.

Der Schwerlastgreifer 4 weist in der vorliegenden Ausführungsform zwei Greifbackenelemente 6, 6' auf, die zueinander baugleich ein geschwungenes, kreisbogensegmentartiges freie Ende 7, 7' aufweisen. Die erfindungsgemäße Abflachung der realen Bewegungsbahn der freien Enden 7, 7' wird auch in dieser Ausführungsform mittels eines Winkelpositionsgebers des Schwenkwerks / des Verschwenkmechanismus 9 realisiert. Zwischen dem Endabschnitt 8 des Auslegerarms 5 und dem Schwerlastgreifer 4 ist überdies ein Schwenkgelenk 19 angeordnet. Dieses ist wahlweise als Kugelgelenk oder auch als Drehgelenk, das eine Verschwenkung des Schwerlastgreifers 4 um eine Achse ermöglicht, die orthogonal zu der Achse verläuft, um die die Greifbackenelemente 6, 6' bei einer Greifbewegung schwenken, auszugestalten. Somit ist die Flexibilität der Schwerlasthebeeinheit 1 erhöht.

An einem Sockel 20 des Auslegerarms 5 ist neben einer elektrischen Anbindung zur Kommunikation des Auslegerarms 5 mit der Steuer- und/oder Regeleinrichtung 11 auch eine hydraulische Leitung zur Betätigung der Aktuatoren 3, 13, 14 eingerichtet. Der Auslegerarm 5 ist um die Längsachse des Sockels 20 unbegrenzt verschwenkbar. Ist das Schwenkgelenk 9 als Drehgelenk (und nicht als Kugelgelenk) ausgestaltet, verläuft die von den Greifbackenelementen 6, 6' durchgeführte Greifbewegung, das heißt die Bewegungsbahn bzw. die Umlaufbahn, in der vorliegenden Ausführungsform um eine Achse, die parallel ist zu der des Schwenkgelenks 19.

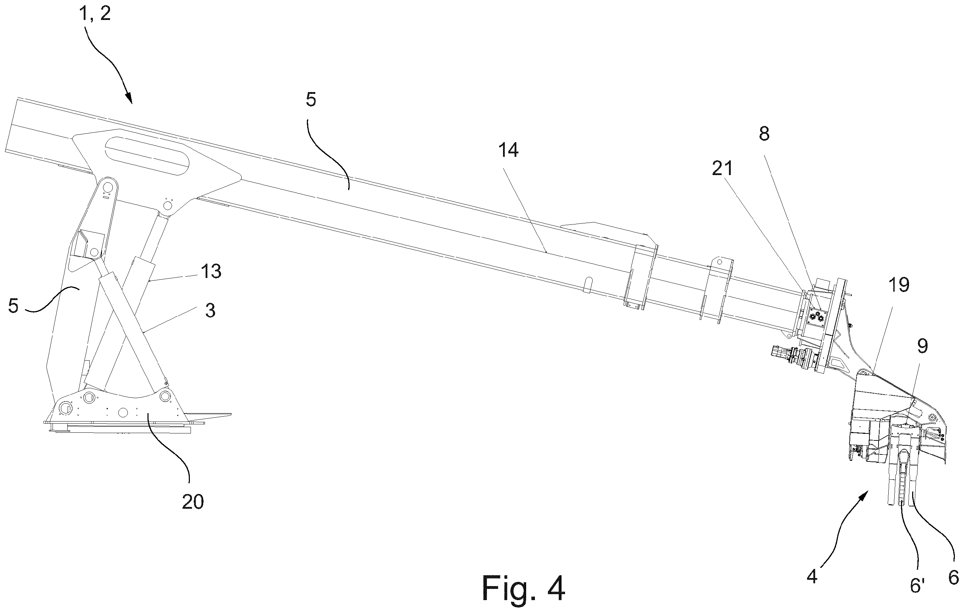

In Fig. 4 ist der Ausleger 2 der Schwerlasthebeeinheit 1 in einer weiteren Ausführungsform dargestellt. Hierbei sind zwei Aktuatoren 3, 13 im Bereich des Sockels 20 angeordnet. In die jeweiligen Aktuatoren 3, 13 ist ein Wegmesssystem integriert. Der dritte Aktuator 14 ist wiederum als Teleskopsystem ausgestaltet und beinhaltet ebenfalls ein Wegmesssystem. Ein viertes und ein fünftes Wegmesssystem sind im Bereich des Schwenkgelenks 19 und im Bereich der Aufnahme der Greifbackenelemente 6, 6' in dem Schwerlastgreifer 4 angeordnet. Das Schwenkgelenk 19 ist wiederum als Kugel- oder alternativ als Drehgelenk auszugestalten. Ist es als Drehgelenk ausgestaltet, verläuft die von den Greifbackenelementen 6, 6' durchgeführte Greifbewegung, das heißt die Bewegungsbahn bzw. die Umlaufbahn, in der vorliegenden Ausführungsform um eine Achse, die orthogonal ist zu der des Schwenkgelenks 19.

Die jeweiligen Greifbackenelemente 6, 6' sind derart aufeinander abgestimmt, dass das eine Element 6' in einen von dem anderen Element 6 ausgebildeten Schlitz eingreift. Somit ist ein großer Relativverschwenkwinkel realisierbar. In der Seitenansicht aus Fig. 4 ist überdies eine elektrische und hydraulische Durchführung 21 schematisch erkennbar. Diese ermöglicht bei endloser Drehung des Schwerlastgreifers 4 relativ zum Auslegerarm 5 eine Versorgung / Betätigung des Verschwenkmechanismus 9, sodass die gewünschte Abflachung der realen Betätigungsbahn durch die Steuer- und/oder Regeleinrichtung 11 zuverlässig gewährleistet ist.

Das erfindungsgemäße Funktionsprinzip zusammenfassend laufen bei einer Greifbewegung die folgenden Schritte ab:
- Ein Bediener sendet über die Betätigung einer Bedientaste den Greifbackenelemente 6, 6' das Signal, aufeinander zu zu schwenken, um eine Greifbewegung durchzuführen.
- Die hieraus resultierende Positionsveränderung der Greifbacken 6, 6' zueinander wird von der Greifmesseinrichtung 12 detektiert und, etwa kontinuierlich oder getaktet, an die Steuer- und/oder Regeleinrichtung 11 gesandt.
- Die Steuer- und/oder Regeleinrichtung 11 empfängt die Information hinsichtlich der Positionsveränderung der Greifbacken 6, 6' zueinander. Vorzugsweise sind in der Steuer- und/oder Regeleinrichtung 11 nun voreingestellte Zuordnungstabellen vorhanden, die jeder Positionsveränderung W1, W2 der Greifbacken 6, 6' einen gewünschten Greifhub H1, H2 zuordnen. Somit erstellt die Steuer- und/oder Regeleinrichtung 11 nun die Information, dass zu der empfangenen Positionsveränderung W1, W2 der Greifhub H1, H2 durchzuführen ist.
- In einer Sub-Einheit er Steuer- und/oder Regeleinrichtung 11 wird nun berechnet, wie der gewünschte Greifhub H1, H2 von den einzelnen Aktuatoren 3, 12, 13 umgesetzt werden kann. So ist der Greifhub H1, H2 eine Funktion der Position der einzelnen Segmente des Auslegerarms 5 zueinander.
- Sobald jene Berechnung abgeschlossen ist, wird ein Ausgangssignal erstellt, dass dazu führt, dass der Endabschnitt 8 den gewünschten Hub ermöglicht, sodass der Schwerlastgreifer 4 den Greifhub H1, H2 erfährt, um möglichst reines Rohmaterial ohne Untergrundberührung aufzunehmen.

### Bezugszeichenliste

- 1: Schwerlasthebeeinheit
- 2: Ausleger
- 3: Aktuator
- 4: Schwerlastgreifer
- 5: Auslegerarm
- 6, 6': Greifbackenelement
- 7, 7': freies Ende
- 8: Endabschnitt
- 9: Verschwenkmechanismus
- 10: Umlaufbahn
- 11: Steuer- und/oder Regeleinrichtung
- 12: Greifmesseinrichtung
- 13: zweiter Aktuator
- 14: dritter Aktuator
- 15: Hackaggregat
- 16: Wurfturm
- 17: fahrbarer Unterbau
- 18: mobiler Hacker
- 19: Schwenkgelenk
- 20: Sockel
- 21: elektrische und hydraulische Durchführung

- H1: Erster Greifhub
- H2: Zweiter Greifhub
- W1: Erster Winkel
- W2: Zweiter Winkel

## Patentansprüche

1. Schwerlasthebeeinheit (1), vorzugsweise zur Montage an einem Fahrzeug, insbesondere einem forstwirtschaftlichen Fahrzeug, beispielsweise einem mobilen Hacker (18),
mit einem Ausleger (2), der zumindest einen mittels zumindest eines Aktuators (3) bewegbaren Auslegerarm (5) hat, an dessen Endabschnitt (8) ein Schwerlastgreifer (4) mit wenigstens zwei zangenartig relativ verschwenkbaren Greifbackenelementen (6, 6') gelagert ist, deren freie Enden (7, 7') sich bei einer Greifbewegung jeweils längs einer durch die Geometrie des Schwerlastgreifers (4) definierten Umlaufbahn (10) bewegen, und
mit einer Steuer- und/oder Regeleinrichtung (11) zur Betätigung des zumindest einen Aktuators (3) und des Schwerlastgreifers (4),
**dadurch gekennzeichnet, dass**
die Steuer- und/oder Regeleinrichtung (11) dafür vorgesehen und ausgebildet ist, den zumindest einen Aktuator (3) in Abhängigkeit einer aktuellen Bewegungswinkelposition der Greifbackenelemente (6, 6') relativ zueinander derart zu betätigen, dass sich eine reale Bewegungsbahn der freien Enden (7, 7') der Greifbackenelemente (6, 6') gegenüber der durch die Geometrie des Schwerlastgreifers (4) definierten Umlaufbahn (10) abflacht, wobei
die Hubbewegung des Endabschnitts (8) in Abhängigkeit der aktuellen Bewegungswinkelposition der Greifbackenelemente (6, 6') relativ zueinander mittels einer Feed-Forward-Steuerung gesteuert ist.

2. Schwerlasthebeeinheit (1) nach Anspruch 1, **dadurch gekennzeichnet, dass** sich die reale Bewegungsbahn der freien Enden (7, 7') der Greifbackenelemente (6, 6') durch eine Überlagerung der Bewegung der Greifbackenelemente (6, 6') längs der durch die Geometrie des Schwerlastgreifers (4) definierten Umlaufbahn (10) und einer durch die Betätigung des zumindest einen Aktuators (3) bewirkten Hubbewegung des Endabschnitts (8) des zumindest einen Auslegerarms (5) ergibt.

3. Schwerlasthebeeinheit (1) nach einem der vorstehenden Ansprüche, **dadurch gekennzeichnet, dass** die reale Bewegungsbahn der freien Enden (7, 7') zumindest annähernd eine Geradenform annimmt.

4. Schwerlasthebeeinheit (1) nach Anspruch 3, **dadurch gekennzeichnet, dass** die jeweilige Geradenform quer, vorzugsweise senkrecht, zu der durch die Betätigung des zumindest einen Aktuators (3) bewirkten Hubbewegung des Endabschnitts (8) verläuft.

5. Schwerlasthebeeinheit (1) nach einem der vorstehenden Ansprüche, **dadurch gekennzeichnet, dass** die Zuordnung zwischen der aktuellen Bewegungswinkelposition der Greifbackenelemente (6, 6') relativ zueinander und der dazu korrelierenden Hubbewegung in der Steuer- und/oder Regeleinrichtung (11) vorbestimmt ist.

6. Schwerlasthebeeinheit (1) nach einem der vorstehenden Ansprüche, **dadurch gekennzeichnet, dass** die Bewegungswinkelposition der Greifbackenelemente (6, 6') relativ zueinander über eine Greifmesseinrichtung (12) erfassbar ist, die dazu vorbereitet ist, ein Signal über eine Kabelverbindung unter Zwischenschaltung der Steuer- und/oder Regeleinrichtung (11) an den zumindest einen Aktuator (3) zu senden.

7. Schwerlasthebeeinheit (1) nach einem der vorstehenden Ansprüche, **dadurch gekennzeichnet, dass** der Auslegerarm (5) einen zweiten Aktuator (13) und/oder einen dritten Aktuator (14) aufweist, sodass der Auslegerarm (5) zumindest zwei oder drei Verstell-Freiheitsgrade aufweist, um die Hubbewegung des Endabschnitts (8) des zumindest einen Auslegerarms (5) zu realisieren.

8. Schwerlasthebeeinheit (1) nach einem der Ansprüche 1 bis 7, **dadurch gekennzeichnet, dass** in der Steuer- und/oder Regeleinrichtung (11) ein zusätzlicher Regler angeordnet ist, der dazu vorbereitet ist, die Hubbewegung des Endabschnitts (8) des zumindest einen Auslegerarms (5) nach einer zumindest teilweise durchgeführten Greifbewegung in Rückkopplung mit der aktuellen Bewegungswinkelposition der Greifbackenelemente (6, 6') relativ zueinander zu überprüfen und gegebenenfalls zu korrigieren.

9. Verfahren zur Durchführung einer Greifbewegung einer Schwerlasthebeeinheit (1) nach einem der vorstehenden Ansprüche, **gekennzeichnet durch** die folgenden Schritte:
- Befehl zum Durchführen einer Greifbewegung der Greifbackenelemente (6, 6') durch einen Bediener;
- Ermittlung der aktuellen Bewegungswinkelposition der Greifbackenelemente (6, 6') relativ zueinander;
- Senden der aktuellen Bewegungswinkelposition der Greifbackenelemente (6, 6') relativ zueinander an eine Steuer- und/oder Regeleinrichtung (11);
- Zuordnung der aktuellen Bewegungswinkelposition der Greifbackenelemente (6, 6') relativ zueinander durch die Steuer- und/oder Regeleinrichtung (11) zu einem korrelierenden Hubbewegung des Endabschnitts (8) des zumindest einen Auslegerarms (5);
- Senden der durchzuführenden Hubbewegung des Endabschnitts (8) des zumindest einen Auslegerarms (5) an den zumindest einen Aktuator (3);
- Durchführen der Hubbewegung des Endabschnitts (8) des zumindest einen Auslegerarms (5) des Greifhubs durch den zumindest einen Aktuator (3).
